# EUROPÄISCHE PATENTANMELDUNG

(11) **EP 1 296 472 A2**
(43) Veröffentlichungstag der Anmeldung: **26.03.2003**
(21) Anmeldenummer: 02102271.0
(22) Anmeldetag: 02.09.2002
(51) Int. Cl.: H04B 10/18

(54) **Anordnung zur Kompensation von Verzerrungen optischer Signale**

(30) Priorität: 25.09.2001 DE 10147169
(71) Anmelder: SIEMENS AKTIENGESELLSCHAFT, 80333 München (DE)
(72) Erfinder: Glingener, Christoph, 83620, Feldkirchen-Westerham (DE)

(57) **Zusammenfassung**

Die Reihenschaltung eines steuerbaren polarisationsabhängigen Laufzeitgliedes (APD) und eines steuerbaren Filters (AOF) ermöglicht eine gute Signalentzerrung, deren Ursachen beispielsweise in der Gruppenlaufzeitdispersion oder in der Polarisationsmodendispersion liegen. Die Reihenschaltung kann durch weitere Mittel zur Signalverbesserung ergänzt werden.

## Beschreibung

Die Erfindung betrifft eine Anordnung zur Kompensation von Verzerrungen optischer Signale.

Eine optische Faser ist kein ideales Medium zur Übertragung optischer Signale. Insbesondere bei der Übertragung von Daten mit hohen Bitraten wird die Reichweite bzw. die Signalqualität durch verschiedene optische Effekte begrenzt. Eine wellenlängenabhängige Dämpfung kann durch geeignete Verstärker kompensiert werden. Andere Effekte, wie Laufzeit-/Gruppendispersion, Selbstphasenmodulation und Polarisationsmodendispersion wirken sich besonders störend bei der Übertragung von Impulsen aus, da sie diese stark verzerren.

Zur Kompensation der Laufzeitdispersion werden spezielle Fasern verwendet, deren Laufzeiteigenschaften invers zu den Übertragungsfasern sind. Ebenso ist es aus "Fiber Optic Communication Systems", 2^{nd} Edition, G.P. Arawall, Seite 444 bekannt, Bragg-Filter zur Dispersionskompensationsdispersion zu verwenden. Aus der Patentanmeldung EP 0 740 173 A2 ist die Verwendung eines Transfersalfilters bekannt, dass bei einem an den Kanalabstand angepassten periodischen Filterverlauf die gleichzeitige Dispersionskompensation bei mehreren Wellenlängen (WDM-System) erlaubt. Es ist an sich bekannt, das Filter automatisch zu optimieren.

Aus OFC 2000 Pepa ThH1, Seite 110 bis 112 "PMD mitigation techniques and effectiveness in installed fibre" von H. Bühlow sind verschiedene verfahren und Regelmethoden zur PMD-Kompensation bekannt.

In "Optics Communications", Vol. 182, No. 1-3, pp. 135 - 141 wird ein Verfahren zur PMD-Kompensation durch einen optischen Kompensator erster Ordnung mit einem einstellbaren elektrischen Transversalfilters verglichen.

Aus ECOC'99 Vol. 2, pp. 138 - 139, H. Bühlow et al ist ein einstellbares elektrisches Transversalfilter beschrieben, das zur Kompensation von PMD und Laufzeitdispersion verwendet wird.

Den bekannten Verfahren und Anordnungen ist gemeinsam, dass sie für hohe Datenraten ab 40 GBit/s nur eine unzureichende Kompensation ermöglichen.

Aufgabe der Erfindung ist es, eine universell einsetzbare Anordnung anzugeben, die relativ einfach zu realisieren ist und mit der die wesentlichen, durch die optische Übertragung hervorgerufenen Verzerrungen kompensierbar sind.

Diese Aufgabe wird durch eine Anordnung zur Kompensation von Signalverzerrungen gemäß Anspruch 1 gelöst.

Vorteilhafte Weiterbildungen der Erfindung sind in den abhängigen Ansprüchen angegeben.

Der wesentliche Vorteil dieser Anordnung ist die rein optische Realisierung. Eine Umwandlung in elektrische Signale bewirkt durch die demodulierende und quadrierende Wirkung einer Fotodiode einen Informationsverlust (Träger, Phase), durch den die Kompensationsmöglichkeiten eingeschränkt werden. Die verwendeten optischen Bausteine sind unkompliziert und ihre Ansteuerung ist relativ einfach. Insbesondere zur adaptiven PDM-Regelung ist sie geeignet. Da unabhängig von der physikalischen Ursache - die Parameter der Anordnung automatisch so eingestellt werden, dass ein optimaler Empfang erzielt wird, wird auch bei mehreren gleichzeitig auftretenden Effekten beispielsweise PMD, Selbstphasenmodulation und Laufzeitdispersion stets eine optimale Empfangsqualität erreicht.

Durch Vervielfachung der Anordnung können nichtlineare Verzerrungen höherer Ordnung, beispielsweise PMD dritter Ordnung, ebenfalls weitgehend kompensiert werden. Über die von den Eigenschaften der Übertragungsfaser bedingten Verzerrungen hinaus können auch solche Verzerrungen (teilweise) kompensiert werden, die durch Sende- oder Empfangseinrichtungen verursacht werden.

Die erfindungsgemäße Anordnung kann in vorteilhafter Weise mit festen bzw. fest einstellbaren Kompensationseinrichtungen, die eine Grundkompensation bewirken, verwendet werden.

Die Erfindung wird anhand von Figuren näher erläutert.

Es zeigen:
- Figur 1: ein Prinzipschaltbild der erfindungsgemäßen Anordnung und
- Figur 2: eine erweiterte Anordnung zur Kompensation von Verzerrungen höherer Ordnung.

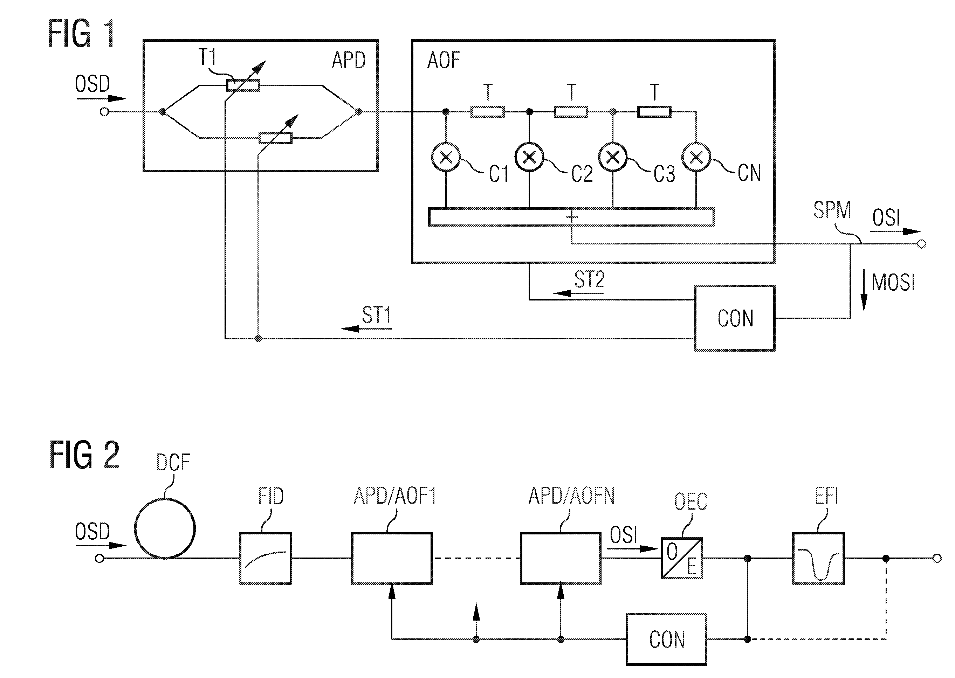

**Figur 1** zeigt die Reihenschaltung eines polarisationsabhängigen einstellbaren Zeitgliedes APD und eines einstellbaren optischen Filters AOF als wesentliches Element zur Entzerrung. Durch einen nicht dargestellten geregelten Polarisationssteller wird eine konstante Polarisation erreicht. Dem polarisationsabhängigen Laufzeitglied APD wird ein verzerrtes optisches Signal OSD zugeführt. Dieses enthält einen Spitter SPL zur Aufteilung in zwei orthogonalen Polarisationsebenen zugeordneten Signalkomponenten, die über zwei Wege mit einstellbaren Laufzeitgliedern T1, T2 geführt werden, die die unterschiedlichen Ausbreitungsgeschwindigkeiten der optischen Welle in beiden Polarisationsebenen bestimmen (ebenso kann ein einstellbares und ein festes Laufzeitglied verwendet werden). Die Signalkomponenten werden durch einen Combiner (Koppler) COM wieder zusammengefasst. Das einstellbare optische Filter AOF ist beispielsweise als analoges Transversalfilter ausgebildet, dessen komplexe Koeffizienten C1, C2, C3, ... einstellbar sind. Es können aber alle bekannten Filterstrukturen oder eine Mischung eines Transversalfilters (FIR-Filter und eines rückgekoppelten Filters (IIR-Filter) verwendet werden.

Ein vom kompensierten Ausgangssignal OSI durch einen Splitter SPM abgezweigtes Meßsignal MOSI wird einer Regeleinrichtung CON zugeführt, die die Signalqualität des entzerrten optischen Signals OSI überprüft. Hierzu wird das optische Signal zur Zeit erst in ein elektrisches Signal umgewandelt (demoduliert), das auch vom optoelektrischen Wandler des Empfängers abgezweigt werden kann. Die Einstellung der Laufzeitglieder T1 und T2 erfolgt über einerstes Steuersignal ST1, die der Filterkoeffizienten durch ein zweites Steuersignal T2.

Die Regelung von Laufzeitglied und Filter kann zeitlich seriell, d.h. nacheinander erfolgen, wobei mehrere Iterationsschritte zum Erreichen eines optimal entzerrten Signals OSI notwendig sein können. Dies ist dann zweckmäßig, wenn die Augendiagramme bewertet werden. Sie kann jedoch ebenso gleichzeitig für Laufzeitglied und Filter erfolgen, beispielsweise durch Analyse des Spektrums des entzerrten Signals.

Das polarisationsabhängige Laufzeitglied kann prinzipiell beliebig ausgeführt sein. Zur Zeit scheinen besonders doppelbrechende Materialien, beispielsweise Lithiumniobat (LINbO3) besonders vorteilhaft zu sein. Das polarisationsabhängige Laufzeitglied kann erster oder höherer Ordnung sein. Auch können mehrere Laufzeitglieder oder optische Filter oder Kompensationsmodule nach Figur 1 in Reihe geschaltet werden.

In **Figur 2** ist das Prinzipschaltbild einer Reihenschaltung optischer Kompensationsmodule APD/ADF1 bis APD/ADFN, die jeweils eine Reihenschaltung eines einstellbaren Zeitgliedes APD und eines einstellbaren Filters OAF enthalten. Mit dieser Anordnung können Verzerrungen höherer Ordnung kompensiert werden. Auch können mehrere polarisationsabhängige Laufzeitglieder und mehrere Filter in Serie geschaltet werden.

Während bei hochbitratigen optischen Systemen die PDM kanalweise zu kompensieren ist, kann die Kompensation der Laufzeitdispersion und Selbstphasenmodulation vorgenommen werden, indem das optische Filter bei WDM-Systemen dem Kanalabstand entsprechend periodisch ausgeführt ist. Eine PMD-Kompensation erfolgt kanalweise erst nach einer Aufteilung des WDM-Signals auf einzelne Kanäle.

Die Reihenschaltung kann zusätzlich nicht einstellbare oder fest einstellbare Elemente enthalten, wie ein dispersionskompensierendes Element DCF, in der Regel eine dispersionskompensierende Faser, ein dispersionskompensierendes Filterelement FID mit festen Koeffizienten (auch mehrere fest eingestellte Filter), die bereits eine Grundkompensation bewirken. Ferner kann über einen optoelektrischen Wandler OEC ein elektrisches Filter EFI der bisher beschriebenen Reihenschaltung zur Restkompensation nachgeschaltet werden. Auch dieses kann adaptiv geregelt werden.

## Patentansprüche

1. Anordnung zur Kompensation von Verzerrungen optischer Signale (OSD) mit
einer Reihenschaltung eines steuerbaren polarisationsabhängigen Laufzeitgliedes (APD) und eines steuerbaren optischen Filters (AOF) zur Signalentzerrung und
mit einer Regeleinrichtung (CON), die die Qualität eines entzerrten optisches Signal (OSI) oder demodulierten elektrischen Signals bewertet wird und Steuersignale (ST1, ST2) an das Laufzeitglied (APD) und das Filter (AOF) abgibt.

2. Anordnung nach Anspruch 1,
**dadurch gekennzeichnet,**
**dass** mehrere Laufzeitglieder (APD) und/oder optische Filter (AOF) in Reihe geschaltet sind.

3. Anordnung nach Anspruch 1,
**dadurch gekennzeichnet,**
**dass** mehrere Reihenschaltungen (APD/AOF1; APD/AOF2; ...) von polarisationsabhängigen Laufzeitgliedern (APD) und optischen Filtern (AOF) in Serie geschaltet sind.

4. Anordnung nach einem der vorhergehenden Ansprüche,
**dadurch gekennzeichnet,**
**dass** die Reihenschaltung ein weiteres nicht einstellbares optisches Filter (OFI) zur Signalentzerrung enthält.

5. Anordnung nach einem der vorhergehenden Ansprüche,
**dadurch gekennzeichnet,**
**dass** das polarisationsabhängige Laufzeitglied ein Laufzeitglied (T2) mit fester Laufzeit enthält.

6. Anordnung nach einem der vorhergehenden Ansprüche,
**dadurch gekennzeichnet,**
**dass** die Reihenschaltung ein dispersionskompensierendes Element (DCF, FDP) enthält.

7. Anordnung nach einem der vorhergehenden Ansprüche,
**dadurch gekennzeichnet,**
**dass** das Laufzeitglied (APD) und das optische Filter (AOF) separat geregelt werden.

8. Anordnung nach einem der vorhergehenden Ansprüche,
**dadurch gekennzeichnet,**
**dass** als optisches Filter(AOF) ein FIR-Filter vorgesehen ist.

9. Anordnung nach einem der vorhergehenden Ansprüche,
**dadurch gekennzeichnet,**
**dass** der Reihenschaltung (ADD, AFF) ein optoelektronischer Wandler (OEC) und ein elektrisches Filter (EFI) zur elektronischen Signaloptimierung nachgeschaltet ist.

10. Anordnung nach einem der vorhergehenden Ansprüche,
**dadurch gekennzeichnet,**
**dass** das optische Filter (OAF, FDP) mit dem Kanalabstand eines WDM-Signals periodisch ist.
